# EUROPEAN PATENT APPLICATION

(11) **EP 3 419 083 A1**
(43) Date of publication of application: **26.12.2018**
(21) Application number: 17878447.6
(22) Date of filing: 31.07.2017
(51) Int. Cl.: H01M 2/10, H01M 2/20, H01M 2/34

(54) **CYLINDRICAL SECONDARY BATTERY MODULE**

(30) Priority: 05.12.2016 KR 20160164607
(71) Applicant: LG Chem, Ltd., Seoul 07336 (KR)
(72) Inventor: RYU, Jae-Uk, Daejeon 34122 (KR); YOON, Ji-Su, Daejeon 34122 (KR); KANG, Dal-Mo, Daejeon 34122 (KR); MUN, Jeong-O, Daejeon 34122 (KR)
(74) Representative: Cabinet Plasseraud
(86) International application number: PCT/KR2017/008253
(87) International publication number: WO 2018/105847

(57) **Abstract**

Provided is a cylindrical secondary battery module. The cylindrical secondary battery module includes: a cylindrical secondary battery cell including a battery case in which an electrode assembly and an electrolyte are accommodated, and a cell cap combined to a positive electrode terminal of the battery case; a busbar interconnecting a plurality of the cylindrical secondary battery cells and having a hollow; and a cut-off unit combined to the busbar in the hollow of the busbar to be connected to a cylindrical secondary battery, and configured to be separated from the busbar when an abnormality is generated in the cylindrical secondary battery cell, such that electric connections with the other cylindrical secondary battery cells are broken.

## Description

### TECHNICAL FIELD

The present application claims priority to Korean Patent Application No. 10-2016-0164607 filed on December 5, 2016 in the Republic of Korea, the disclosure of which is incorporated herein by reference.

The present disclosure relates to a cylindrical secondary battery module, and more particularly, to a cylindrical secondary battery module in which, when an abnormality is generated in any one of a plurality of cylindrical secondary battery cells that are interconnected, an electric connection of the corresponding secondary battery cell may be broken.

### BACKGROUND ART

According to technical development and an increase in demands regarding mobile devices, demands for secondary batteries as an energy source are rapidly increasing. Generally, nickel cadmium batteries or hydrogen ion batteries have been used as secondary batteries, but recently, lithium secondary batteries that have very low self-discharge rates, have high energy densities, and are freely charged and discharged because a memory effect is barely generated compared to nickel-based secondary batteries, are widely used.

Such a lithium secondary battery mainly uses a lithium-based oxide and a carbon material respectively as a positive electrode active material and a negative electrode active material. The lithium secondary battery includes an electrode assembly, in which a positive electrode plate and a negative electrode plate on which the positive electrode active material and the negative electrode active material are respectively coated are arranged with a separator therebetween, and an exterior material, i.e., a battery case, that seals and accommodates the electrode assembly with an electrolyte.

The lithium secondary battery includes a positive electrode, a negative electrode, a separator disposed therebetween, and an electrolyte, and is classified into a lithium ion battery (LIB), a polymer lithium ion battery (PLIB), or the like based on which positive electrode active material and negative electrode active material are used. Generally, an electrode of the lithium secondary battery is formed by coating the positive or negative electrode active material on a current collector, such as an aluminum or copper sheet, a mesh, a film, a foil, or the like, and then drying the positive or negative electrode active material.

Generally, the secondary battery may be classified into a cylindrical type, a square type, or a pouch type according to a shape of an external material in which a battery is accommodated.

A cylindrical secondary battery may be used in a secondary battery module form by connecting a plurality of secondary battery cells in series or parallel. However, when an abnormality, such as overpressure, overheating, or the like, is generated in any one of the plurality of secondary battery cells that are interconnected, other secondary battery cells that are normally operating may also become unstable.

### DISCLOSURE

### Technical Problem

Therefore, the present disclosure is directed to providing a cylindrical secondary battery module in which, when an abnormality, such as overpressure, overheating, or the like, is generated in any one of a plurality of cylindrical secondary battery cells that are interconnected, an electric connection of the corresponding secondary battery cell may be broken.

Also, the present disclosure is directed to providing a cylindrical secondary battery module in which, by breaking an electric connection of a secondary battery cell that has an abnormality, other secondary battery cells may be stably continuously operated.

Also, the present disclosure is directed to providing a cylindrical secondary battery module in which a second member prepared to break an electric connection when an abnormality is generated may be held together despite external vibration or impact.

### Technical Solution

In one aspect of the present disclosure, there is provided a cylindrical secondary battery module including: a cylindrical secondary battery cell including a battery case in which an electrode assembly and an electrolyte are accommodated, and a cell cap combined to a positive electrode terminal of the battery case; a busbar interconnecting a plurality of the cylindrical secondary battery cells and having a hollow; and a cut-off unit provided in the hollow of the busbar to be combined to the cylindrical secondary battery cell and electrically connected to the busbar, and configured to be separated from the busbar when an abnormality is generated in the cylindrical secondary battery cell, such that electric connections with the other cylindrical secondary battery cells are broken.

Also, the cut-off unit may be combined to the cell cap of the cylindrical secondary battery cell.

Also, an insulating member may be disposed between the busbar and the cylindrical secondary battery cell.

Also, the cut-off unit may include: a first member disposed in the hollow of the busbar to be combined to the cell cap; and a second member electrically connected to each of the first member and the busbar.

Also, the second member may include: a first connection point connected to the first member; a second connection point connected to the busbar; and a round portion rounded from the first connection point and connected to the second connection point.

Also, the second member may have a pre-set range of width such that a connection with the busbar is broken by a predetermined range of pressure.

Also, the second member may have a pre-set range of width such that a connection with the busbar is broken at a predetermined range of temperature.

Also, the second member may be formed of a copper or aluminum material so as to be broken when overheated.

### Advantageous Effects

According to embodiments of the present disclosure, when an abnormality, such as overpressure, overheating, or the like, is generated in any one of a plurality of cylindrical secondary battery cells that are interconnected, an electric connection of the corresponding secondary battery cell may be broken by a disconnecting unit included in the secondary battery cell.

Also, by breaking an electric connection of a secondary battery cell that has an abnormality, other secondary battery cells may be stably continuously operated.

Also, a second member prepared to break an electric connection when an abnormality is generated is rounded, and thus the second member may be held together despite external vibration or impact.

### DESCRIPTION OF DRAWINGS

FIG. 1 is a partial cross-sectional view of a cylindrical secondary battery cell in a cylindrical secondary battery module according to a first embodiment of the present disclosure.
FIG. 2 is a schematic overall perspective view of the cylindrical secondary battery module according to the first embodiment of the present disclosure.
FIG. 3 is a plan view of the cylindrical secondary battery module according to the first embodiment of the present disclosure.
FIG. 4 is a perspective view of a cell cap and a cut-off unit separated from a cylindrical secondary battery cell in the cylindrical secondary battery module according to the first embodiment of the present disclosure.
FIG. 5 is a plan view of a cylindrical secondary battery module according to a second embodiment of the present disclosure.
FIG. 6 is a plan view of a cylindrical secondary battery module according to a third embodiment of the present disclosure.

### MODE FOR DISCLOSURE

Hereinafter, a cylindrical secondary battery module according to preferred embodiments of the present disclosure will be described in detail with reference to the accompanying drawings.

It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, for convenience of description and clarity, each component or a size of a certain part forming the component may be exaggerated, omitted, or schematically illustrated. Accordingly, the size of each component does not fully reflect the actual size. In the description of the present disclosure, certain detailed explanations of related art are omitted when it is deemed that they may unnecessarily obscure the essence of the disclosure.

The term 'combined' or 'connected' used in the present specification includes not only a case where one member is directly combined or directly connected to another member, but also a case where one member is indirectly combined or indirectly connected to another member via a connecting member.

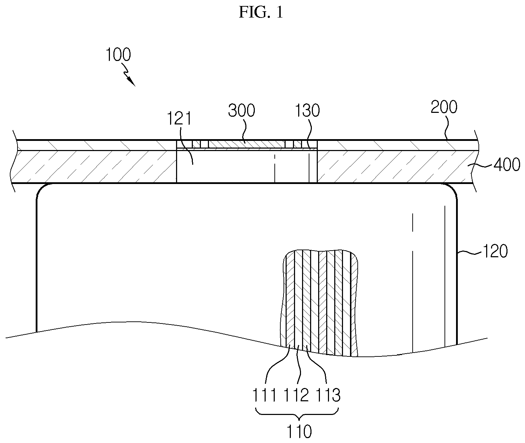

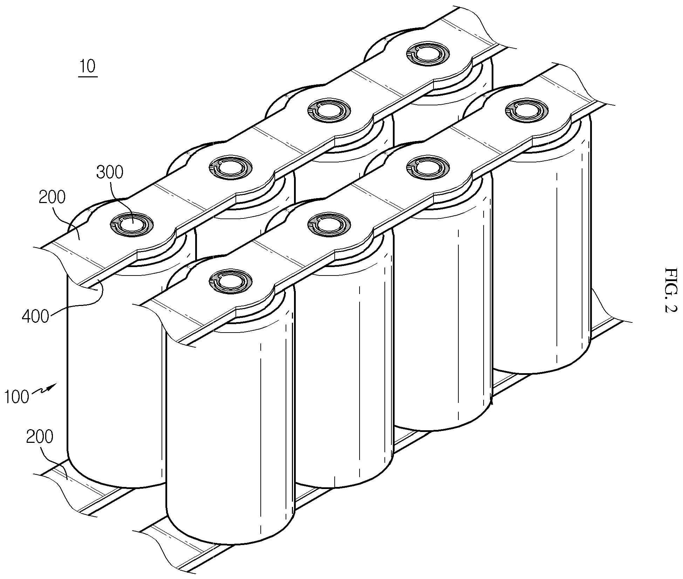

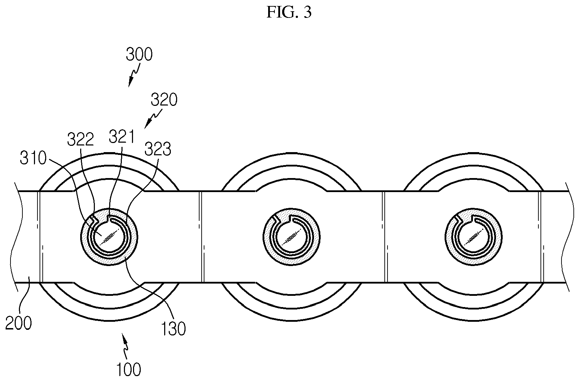

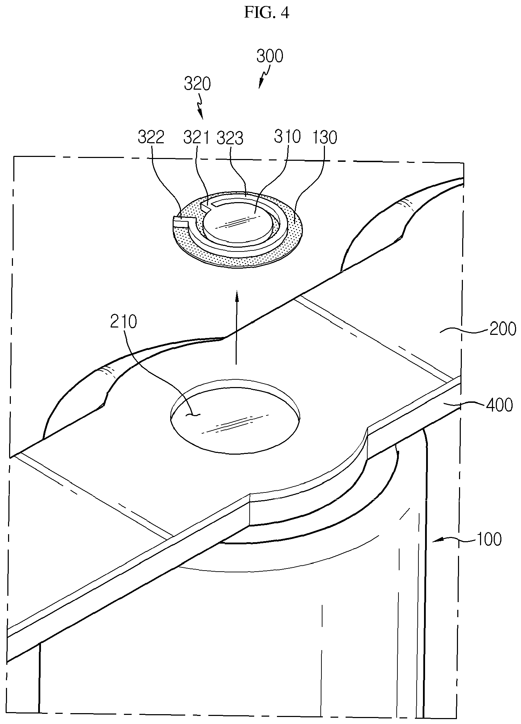

FIG. 1 is a partial cross-sectional view of a cylindrical secondary battery cell in a cylindrical secondary battery module according to a first embodiment of the present disclosure, FIG. 2 is a schematic overall perspective view of the cylindrical secondary battery module according to the first embodiment of the present disclosure, FIG. 3 is a plan view of the cylindrical secondary battery module according to the first embodiment of the present disclosure, and FIG. 4 is a perspective view of a cell cap and a cut-off unit separated from a cylindrical secondary battery cell in the cylindrical secondary battery module according to the first embodiment of the present disclosure.

Referring to FIGS. 1 through 4, a cylindrical secondary battery module 10 according to the first embodiment of the present disclosure includes a cylindrical secondary battery cell 100, a busbar 200, and a cut-off unit 300.

Referring to FIG. 1, the cylindrical secondary battery cell 100 includes an electrode assembly 110, for example, the electrode assembly 110 of a jelly-roll form, a battery case 120 of a cylindrical type in which the electrode assembly 110 is accommodated with an electrolyte, and a cell cap 130 combined to, for example, a positive electrode terminal 121 of the battery case 120.

The electrode assembly 110 may have a structure in which a positive electrode 111, a negative electrode 113, and a separator are stacked while the separator 112 is disposed between the positive electrode 111 and the negative electrode 113, and are rolled in a jelly-roll form. A positive electrode lead (not shown) is attached to the positive electrode 111 to be connected to the positive electrode terminal 121 at, for example, a top portion of the battery case 120, and a negative electrode lead (not shown) is attached to the negative electrode 113 to be connected to a negative electrode terminal at, for example, a bottom portion of the battery case 120. Also, a center pin (not shown) of a cylindrical type may be inserted into a center portion of the electrode assembly 110. Such a center pin (not shown) fixes and supports the electrode assembly 110, and may function as a passage discharging a gas generated via an internal reaction during charging/discharging and operation.

A safety belt (not shown) for discharging a gas by rupturing due to a pressure increase inside the battery case 120, a safety device (not shown) of a positive temperature coefficient (PTC) element type disposed between the cell cap 130 and the safety belt (not shown), and a current blocking member (not shown) having one upper side contacting the safety belt and having one lower side connected to the positive electrode lead (not shown) of the electrode assembly 110 may be provided inside the battery case 120, for example, below the cell cap 130.

In normal operating conditions of such a cylindrical secondary battery cell 100, the positive electrode 111 of the electrode assembly 110 may be connected to and exchange an electric current with the cell cap 130 through the positive electrode lead (not shown), the current blocking member (not shown), the safety belt (not shown), and the safety device (not shown). However, internal pressure may increase when a gas is generated inside the secondary battery cell while the cylindrical secondary battery cell 100 is overcharged or the cylindrical secondary battery cell 100 is charged or discharged, and at this time, the safety belt (not shown) ruptures or bursts such that the gas inside the battery case 120 moves towards the cell cap 130. Also, the cell cap 130 combined to the positive electrode terminal 212 may be separated by pressure of the gas. Here, the cell cap 130 may be prepared to be separated by pressure of a gas generated inside the battery case 120.

Meanwhile, the plurality of cylindrical secondary battery cells 100 may be used by being connected in series or parallel via various methods. For example, the busbars 200 may be connected respectively to the positive electrode terminal 121 and the negative electrode terminal of the cylindrical secondary battery cell 100 such that the cylindrical secondary battery cells 100 are connected in series or parallel. Hereinafter, for convenience of description, the positive electrode terminals 121 and the negative electrode terminals of the plurality of cylindrical secondary battery cells 100 are connected in parallel respectively through the busbars 200, but the scope of right of the current embodiment is not limited thereto.

Referring to FIGS. 2 through 4, the busbar 200 interconnects the plurality of cylindrical secondary battery cells 100 and has a hollow 210. The cut-off unit 300 is disposed in the hollow 210 of the busbar 200 to be connected to the busbar 200. Details thereof will be described below.

A plurality of the busbar 200 may be provided in plate shapes as shown in FIG. 2, or the plurality of cylindrical secondary battery cells 100 may be connected by one plate. The busbar 200 may be formed of a conductive material such that the plurality of cylindrical secondary battery cells 100 are electrically connected to each other. The busbar 200 may be formed of, for example, aluminum, copper, or nickel-coated copper.

Referring to FIGS. 2 and 4, an insulating member 400 may be disposed between the busbar 200 and the cylindrical secondary battery cell 100. For example, when an abnormality, such as overpressure, overheating, or the like is generated in the cylindrical secondary battery cell 100, the cell cap 130 combined to the positive electrode terminal 121 may be separated and at this time, the cut-off unit 300 combined to the cell cap 130 may be separated from the busbar 200 and disconnected (refer to FIG. 4). Here, if the insulating member 400 is not disposed between the busbar 200 and the cylindrical secondary battery cell 100, the cylindrical secondary battery cell 100 having an abnormality, such as overpressure, overheating, or the like, may be still electrically connected to the other cylindrical secondary battery cells 100 that are normally operating. Accordingly, the insulating member 400 may be disposed between the busbar 200 and the cylindrical secondary battery cell 100 so as to block an electric connection of the cylindrical secondary battery cell 100 having the abnormality and the other cylindrical secondary battery cells 100 that are normally operating, when the cut-off unit 300 is separated from the busbar 200. Here, the insulating member 400 may be formed if various electric insulating materials. However, the present disclosure is not limited thereto, and only the cut-off unit 300 may be combined to and electrically connected to the cell cap 130, and another portion of the busbar 200 may be distanced from the cylindrical secondary battery cell 100 so as not to be electrically connected thereto, via a structural shape change.

Referring to FIGS. 1 through 4, the cut-off unit 300 may be disposed in the hollow 210 of the busbar 200. Also, the cut-off unit 300 electrically interconnects the busbar 200 and the cylindrical secondary battery cell 100. In other words, the cut-off unit 300 is disposed in the hollow 210 of the busbar 200 to be combined to the cylindrical secondary battery cell 100 and electrically connected to the busbar 200. Accordingly, when the cut-off unit 300 is separated from the busbar 200 due to generation of an abnormality, for example, overpressure, overheating, or the like, in the cylindrical secondary battery cell 100, electric connections between the cylindrical secondary battery cell 100 having the abnormality and the other cylindrical secondary battery cells 100 normally operating may be broken. Here, as described above, since the insulating member 400 may be disposed between the busbar 200 and the cylindrical secondary battery cell 100, the electric connection of the cylindrical secondary battery cell 100 having the abnormality to the other normal cylindrical secondary battery cells 100 is completely broken, and the other secondary battery cells normally operating may stably continuously operate.

The cut-off unit 300 may be combined to the cell cap 130 of the cylindrical secondary battery cell 100. As described above, when internal pressure increases due to a gas generated inside the cylindrical secondary battery cell 100, the gas inside the battery cease 120 may move towards the cell cap 130 and the cell cap 130 may be separated by pressure of the gas, and at this time, the cut-off unit 300 combined to the cell cap 130 may also be separated from the busbar 200 by the pressure of the gas (refer to FIG. 4). In this regard, a portion where the cut-off unit 300 and the busbar 200 are connected, for example, a second member 320 of the cut-off unit 300 described below has a width capable of being broken by predetermined pressure. In other words, when a connection portion of the cut-off unit 300 and the busbar 200 is too thick, the cut-off unit 300 may not be separated by the gas pressure inside the battery case 120, and thus the second member 320 has a width enough for the cut-off unit 300 to be broken by the gas pressure generated inside the cylindrical secondary battery cell 100. However, since pressure of a gas generated inside the cylindrical secondary battery cell 100 may vary according to various conditions, such as an entire size of the cylindrical secondary battery cell 100, an amount of electrolyte accommodated in the battery case 120, etc., a pressure range of a gas may be experimentally pre-set, and a range of the width of the second member 320 may be pre-set via experiments to correspond to each pressure range.

Meanwhile, the cut-off unit 300, for example, the second member 320 of the cut-off unit 300 described below has a pre-set range of width such that a connection with the busbar 200 is broken when the cylindrical secondary battery cell 100 is overheated over a pre-set temperature range. In other words, when the width of the second member 320 is small, a unit area is decreased and thus resistance per unit area is increased, and when overheating is generated, relatively high heat is generated by high resistance, and thus a portion of the second member 320 having a small width may be broken by a high temperature. In this regard, the second member 320 may be formed of a copper or aluminum material to be broken during overheating. Also, like the pressure range, the width of the second member 320 may be experimentally set. In other words, the range of width of the second member 320 may be pre-set via experiments to correspond to the temperature range to be set as overheating.

The cut-off unit 300 may include a first member 310 and the second member 320. The first member 310 is disposed in the hollow 210 of the busbar 200 to be combined to the cell cap 130. The first member 310 may be formed in a shape corresponding to a shape of the cell cap 130, and for example, when a cross-section of the cell cap 130 is circular, a cross-section of the first member 310 may also be circular. However, the shape of the cell cap 130 and the shape of the first member 310 do not necessarily need to be the same, and the first member 310 may have various shapes. Also, the first member 310 may be combined to the cell cap 130 via various methods, for example, via welding, and at this time, the first member 310 may be combined to the cell cap 130 such that a current is exchangeable. The first member 310 may be disposed approximately at a center portion of the busbar 200 as shown in FIGS. 3 and 4, but is not limited thereto. The second member 320 may be electrically connected to each of the first member 310 and the busbar 200 through various methods and shapes. For example, the second member 320 may include a first connection point 321, a second connection point 322, and a round portion 323. The first connection point 321 is connected to the first member 310. In other words, the first connection point 321 may be combined to an arbitrary wall surface of the first member 310. The second connection point 322 may be connected to the busbar 200. In other words, the second connection point 322 may be combined to an arbitrary wall surface of the busbar 200. Also, the round portion 323 may be rounded from the first connection point 321 and connected to the second connection point 322. For example, the round portion 323 may be configured in a form spherically rotating along an outer edge of the first member 310, like a coil spring, from the first connection point 321 to the second connection point 322. As such, the second member 320 may have a structure spherically wound like a coil spring, and accordingly, may be held together despite external vibration or impact. In other words, the second member 320 is configured to be broken from the busbar 200 when an abnormality, such as overpressure, overheating, or the like, is generated in the cylindrical secondary battery cell 100, but needs to maintain an electric connection by being combined to the busbar 200 when the cylindrical secondary battery cell 100 normally operates. However, when external vibration or impact is transferred to the second member 320, the second member 320 having a small width may be broken. Accordingly, the second member 320 is formed in a spherically rotating shape to have an elastic property like a coil spring, such that the connection is not broken due to external vibration or impact but is maintained.

Hereinafter, operations and effects of the cylindrical secondary battery module 10 according to the first embodiment of the present disclosure will be described with reference to accompanying drawings.

In the cylindrical secondary battery module 10, the plurality of cylindrical secondary battery cells 100 are electrically connected through the busbar 200. Here, an abnormality, such as overpressure, overheating, or the like, may be generated in at least one of the plurality of cylindrical secondary battery cells 100, and at this time, the other cylindrical secondary battery cells 100 normally operating may be adversely affected, and thus electric connections between the cylindrical secondary battery cells 100 normally operating and the cylindrical secondary battery cell 100 having the abnormality need to be broken.

The cut-off unit 300 may include the first member 310 and the second member 320, the first member 310 is disposed in the hollow 210 formed on the busbar 200 to be combined to the cell cap 130 combined to the positive electrode terminal 121 of the battery case 120, and the second member 320 electrically connects the first member 310 and the busbar 200 by spherically rotating in a circle along a circumference of the first member 310. Also, the insulating member 400 is disposed between the busbar 200 and the cylindrical secondary battery cell 100. Here, the second member 320 has a pre-set range of width to be broken during overpressure or overheating, and may be formed of a copper or aluminum material. When an abnormality, such as overpressure, overheating, or the like, is generated in at least one of the cylindrical secondary battery cells 100, a connection portion of the second member 320 with the busbar 200 is broken by gas pressure or a high temperature. Also, since the insulating member 400 is disposed between the busbar 200 and the cylindrical secondary battery cell 100, electric connections between the cylindrical secondary battery cell 100 having the abnormality and the cylindrical secondary battery cells 100 normally operating are broken, and accordingly, battery stability of the cylindrical secondary battery module 10 may be maintained in overall.

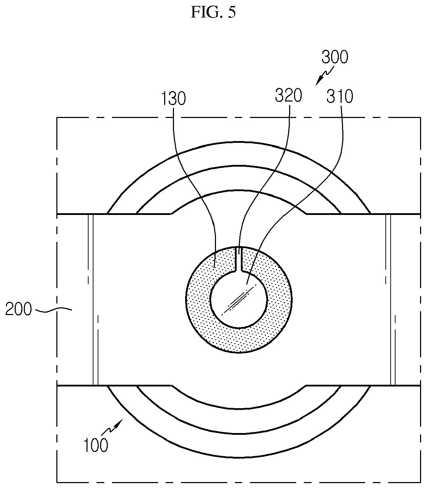

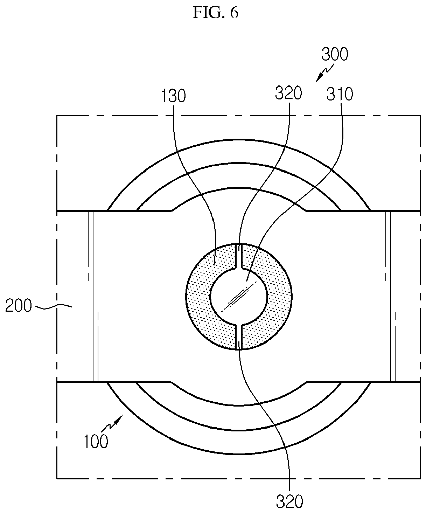

FIG. 5 is a plan view of a cylindrical secondary battery module according to a second embodiment of the present disclosure, and FIG. 6 is a plan view of a cylindrical secondary battery module according to a third embodiment of the present disclosure.

Hereinafter, operations and effects of the cylindrical secondary battery module 10 according to the second and third embodiments of the present disclosure will be described with reference to accompanying drawings, and details overlapping those of the cylindrical secondary battery module 10 according to the first embodiment of the present disclosure are replaced by the above descriptions.

In the second and third embodiments of the present disclosure, the shape of the second member 320 is different from the first embodiment.

The second embodiment of FIG. 5 is different from the first embodiment including the second member 320 having a round in that the first member 310 and the busbar 200 are connected by one second member 320 having a linear shape, and the third embodiment of FIG. 6 is different from the first and second embodiments in that the first member 310 and the busbar 200 are connected at facing locations by two second members 320 having a linear shape like the second embodiment.

In other words, the cut-off unit 300 includes the second member 320 that is rounded to cope with external vibration or impact as described above in the first embodiment, but a degree of vibration or impact may not be strong according to an installation place of the cylindrical secondary battery module 10. The cylindrical secondary battery module 10 used in such an environment may include the cut-off unit 300 including the second member 320 having a linear shape as in the second and third embodiments. The second member 320 of the second and third embodiments having a linear shape is advantages in terms of expenses because the second member 320 having the linear shape is processed easier and manufactured with materials less than the second member 320 of the first embodiment having a round. Accordingly, one of the first through third embodiments may be suitably selected based on a degree of external vibration or impact. However, the number of the second members 320 having a linear shape included in the cut-off unit 300 is not limited to the second or third embodiment, and although not illustrated, the number and arrangement of the second members 320 having a linear shape may vary.

While the present disclosure has been described with reference to limited embodiments and drawings, the present disclosure is not limited thereto, and various changes and modifications within the technical ideas of the present disclosure and the equivalent scope of the appended claims will become apparent to those skilled in the art from this detailed description.

### INDUSTRIAL APPLICABILITY

The present disclosure relates to a cylindrical secondary battery module, and in particular, is usable in industries related to secondary batteries.

## Claims

1. A cylindrical secondary battery module comprising:
a cylindrical secondary battery cell comprising a battery case in which an electrode assembly and an electrolyte are accommodated, and a cell cap combined to a positive electrode terminal of the battery case;
a busbar interconnecting a plurality of the cylindrical secondary battery cells and having a hollow; and
a cut-off unit provided in the hollow of the busbar to be combined to the cylindrical secondary battery cell and electrically connected to the busbar, and configured to be separated from the busbar when an abnormality is generated in the cylindrical secondary battery cell, such that electric connections with the other cylindrical secondary battery cells are broken.

2. The cylindrical secondary battery cell module of claim 1, wherein the cut-off unit is combined to the cell cap of the cylindrical secondary battery cell.

3. The cylindrical secondary battery cell module of claim 1, wherein an insulating member is disposed between the busbar and the cylindrical secondary battery cell.

4. The cylindrical secondary battery cell module of claim 2, wherein the cut-off unit comprises:
a first member disposed in the hollow of the busbar to be combined to the cell cap; and
a second member electrically connected to each of the first member and the busbar.

5. The cylindrical secondary battery module of claim 4, wherein the second member comprises:
a first connection point connected to the first member;
a second connection point connected to the busbar; and
a round portion rounded from the first connection point and connected to the second connection point.

6. The cylindrical secondary battery module of claim 4, wherein the second member has a pre-set range of width such that a connection with the busbar is broken by a predetermined range of pressure.

7. The cylindrical secondary battery module of claim 4, wherein the second member has a pre-set range of width such that a connection with the busbar is broken at a predetermined range of temperature.

8. The cylindrical secondary battery module of claim 7, wherein the second member is formed of a copper or aluminum material so as to be broken when overheated.
